# EUROPEAN PATENT SPECIFICATION

(11) **EP 2 885 205 B1**
(45) Date of publication and mention of the grant of the patent: **17.04.2019**
(21) Application number: 12767094.1
(22) Date of filing: 17.08.2012
(51) Int. Cl.: B64C 1/14

(54) **DOOR ASSEMBLY FOR AIRCRAFT INTERIOR**
TÜRANORDNUNG FÜR FLUGZEUGINNENRAUM
ENSEMBLE PORTE POUR L'INTÉRIEUR D'UN AVION

(43) Date of publication of application: 24.06.2015
(73) Proprietor: Bombardier Inc., Dorval, QC H4S 1Y9 (CA); Short Brothers Plc, Belfast Antrim BT3 9DZ (GB)
(72) Inventor: GUIMONT, Jean-François, Laval, Quebec H7L 1M6 (CA); ROSA, Yvan, St-Hubert, Quebec J3Y 8P9 (CA); TREMBLAY, Benjamin, Quebec J0K 3H0 (CA); BOXER, Usher, Kirkland, Quebec H9H 3J3 (CA)
(74) Representative: HGF Limited
(86) International application number: PCT/IB2012/001600
(87) International publication number: WO 2014/027215

(56) References cited:
- WO-A1-91/00823
- US-A- 3 453 777
- US-B2- 6 866 226

## Description

### TECHNICAL FIELD

The disclosure relates generally to doors for use in aircraft interiors, and more particularly, to the pressure-relief functionality of such doors and to the reduction of light bleed across such doors.

### BACKGROUND OF THE ART

Aircraft interiors, especially those of corporate aircraft, are often designed to fit the needs of individual buyers. Such aircraft interiors can comprise doors for opening or closing passages between zones of the aircraft interior. It is often preferred to use doors which slide into pockets (i.e. pocket doors) in a bulkhead because such doors can be more aesthetically pleasing. A pocket door can comprise one or two segments which slide(s) horizontally in a sliding plane perpendicular to the floor of the aircraft interior and move(s) laterally to open or close the passages between the zones within the aircraft interior. When the pocket door is in an open position, the door segment(s) is/are recessed into the bulkhead pockets and occupants can pass through the passage.

Aircraft certification authorities require that doors of an aircraft interior have blow-out functionality during rapid decompression events. For example, if there is rapid decompression in one of the two adjacent zones of the aircraft interior during flight, the aircraft door must be capable of blowing out to relieve the pressure differential between the adjacent zones without shattering. This concern might be particularly prevalent when the air circulation between the adjacent zones is limited such as, for example, when the aircraft door is in a closed position. The purpose of such blow-out functionality is to avoid damage to other parts of the aircraft interior, such as bulkheads separating the adjacent zones, and also avoid injury to aircraft occupants by flying debris.

Aircraft interior doors with blow-out panels are known and are used between different zones within aircraft interiors. Known blow-out panels are designed to blow-out (e.g. become released) in the presence of a predetermined pressure differential to create an opening between the adjacent zones and rapidly equalize the pressure differential between the two zones. Some known blow-out panels are retained in position by frangible structure designed to break in the event of a predetermined pressure differential to allow for the pressure-relief function of the panel. Consequently, such frangible support structure can be relatively weak and can sometimes fail prematurely during normal use.

Other types of doors for aircraft interior and designed to provide blow-out functionality are known and some can include relatively complex mechanisms for providing pressure-relief functions of such doors. For example, U.S. Patent No. 6,866,226 (hereinafter "Pratt") discloses a panel within a door where the panel is allowed to become disengaged during a decompression event instead of having the door and/or panel structure structurally fail. Specifically, Pratt discloses a latching mechanism used to hold the panel in position during normal use and a pressure-responsive device coupled to the latching mechanism. The pressure responsive device is operable to respond to a pressure differential across the panel to allow the latching mechanism to become unlatched during a decompression event to thereby permit release of the panel. Another type of door having blow-out functionality is disclosed in U.S. Patent No. 4,989,808 (hereinafter "Spraggins"). Spraggins discloses a pocket-type door having two door panels mounted to respective hinges that are configured to permit rotation of the door panels out of their sliding plane during a rapid decompression event.

US patent US 3 453 777 relates to a pressure venting window panel assembly for use in relieving pressure build up in an enclosed building structure as a result of, for example an explosion.

The panel assembly includes a pivotally mounted panel, which is secured by a magnetic latch. The magnetic latch permits the assembly to be calibrated to open the panel upon a predetermined pressure within the enclosure.

### SUMMARY

The disclosure describes systems, devices, assemblies and methods relating to doors for aircraft interiors.

In various aspects, the disclosure describes door assemblies with pressure-relief elements that are configured to be released upon a predetermined pressure differential across the pressure-relief elements. In other aspects, the disclosure describes door assemblies configured to reduce light bleed between adjacent zones in aircraft interiors.

Thus, in one aspect, the disclosure describes a door assembly for an aircraft interior wherein the door assembly comprises:
a door for opening and closing an aperture between zones of the aircraft interior, a pressure-relief element forming at least a portion of the door, the pressure-relief element being retained by a magnetic force calibrated to permit release of the pressure-relief element upon presence of a predetermined pressure differential across the pressure-relief element; and
an interface configured to couple the door to the aircraft interior.

In another aspect, the disclosure describes a door assembly for an aircraft interior wherein the door assembly comprises:
a door for opening and closing an aperture between zones of the aircraft interior, a pressure-relief element forming at least a portion of the door; and
a carriage movable along a track for guiding the pressure-relief element in and out of the aperture during opening and closing of the door, the carriage being configured to couple the pressure-relief element to the aircraft interior and permit non-destructive decoupling of the pressure-relief element from the aircraft interior, the carriage permitting adjustment of the position of the pressure-relief element relative to the aircraft interior.

In a further aspect, the disclosure describes a door assembly for an aircraft interior wherein the door assembly comprises:
a door for opening and closing an aperture between zones of the aircraft interior, a footer forming at least a lower part of the door; and
a footer carriage coupled to the footer and movable along a footer track to guide the footer laterally in and out of the aperture during opening and closing of the door, the footer carriage being configured to cause downward movement of the footer relative to the aircraft interior during closing of the door.

Further details of these and other aspects of the subject matter of this application will be apparent from the detailed description and drawings included below.

### DESCRIPTION OF THE DRAWINGS

Reference is now made to the accompanying drawings, in which:
FIG. 1 is a perspective view of an aircraft with a cut-away portion showing a door separating adjacent zones of the aircraft's interior;
FIG. 2 is an axonometric view of the door of FIG. 1 partially recessed into a cavity inside a bulkhead;
FIG. 3A is a front elevation view of the door of FIG. 1 in a closed position;
FIG. 3B is a front elevation view of the door of FIG. 1 in an open position;
FIG. 4 is an axonometric view showing a front side of a footer carriage to which a footer of the door of FIGS. 3A and 3B is coupled;
FIG. 5 is a front elevation view of the footer carriage of FIG. 4;
FIG. 6 is an axonometric view of the footer carriage of FIG. 4 showing magnets used to couple with the footer of the door of FIGS. 3A and 3B;
FIG. 7 is an axonometric view of a portion of the footer showing a member for cooperating with the magnets of FIG. 6;
FIG. 8 is a cross-sectional view taken along line 8-8 in FIG. 5 and showing cooperating self-locating features on the footer carriage and the footer;
FIG. 9 is an axonometric view showing a rear side of the footer carriage of FIG. 4;
FIG. 10 is an axonometric view of the footer carriage of FIG. 4 showing adjustment mechanisms;
FIG. 11 is a front elevation view of a body of the footer carriage of FIG. 4 showing an adjustment direction of the body;
FIG. 12 is an axonometric view of a footer carriage and footer according to another embodiment and showing a side of the footer carriage facing the footer;
FIG. 13 is an axonometric view of the footer carriage and footer of FIG. 12 showing a side of the footer facing the footer carriage;
FIG. 14 is a front elevation view of the footer carriage and a main carriage with a link therebetween; and
FIG. 15 is an axonometric view of a portion of the main carriage of FIG. 14.

### DETAILED DESCRIPTION

Aspects of various embodiments are described through reference to the drawings.

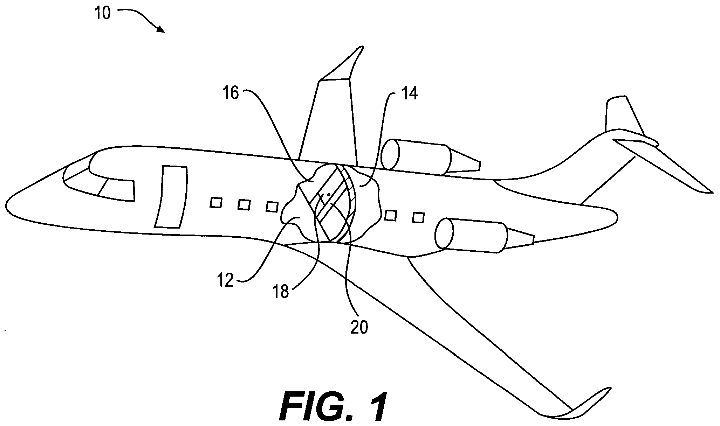

FIG.1 illustrates an exemplary aircraft, generally shown at 10, comprising an aircraft interior such as a passenger cabin, which may have one or more zones therein and which may be pressurized and potentially be occupied by passengers during flight. For example, the aircraft interior may have first zone 12 and second zone 14. First zone 12 and second zone 14 may be adjacent to one another and may be separated by bulkhead 16 and door 18. Bulkhead 16 may define one or more apertures 20. Aperture 20 may include one or more passages through which occupants may pass through and move between zones 12, 14. Alternatively, aperture 20 may, for example, include one or more openings that may not necessarily be configured or intended for occupant traffic. Door 18 may be movable to open and closed aperture 20. Door 18 may comprise any conventional or other type of barrier(s) suitable for opening and closing aperture 20. For example, door 18 may comprise any suitable type of sliding and/or swinging barrier such has hinged doors and/or pocket doors. Aircraft 10 may include, for example, any suitable aircraft such as corporate, private, commercial or any other type of aircraft that may require its interior door 18 to be configured to have blow-out functionality in the event of a rapid decompression event.

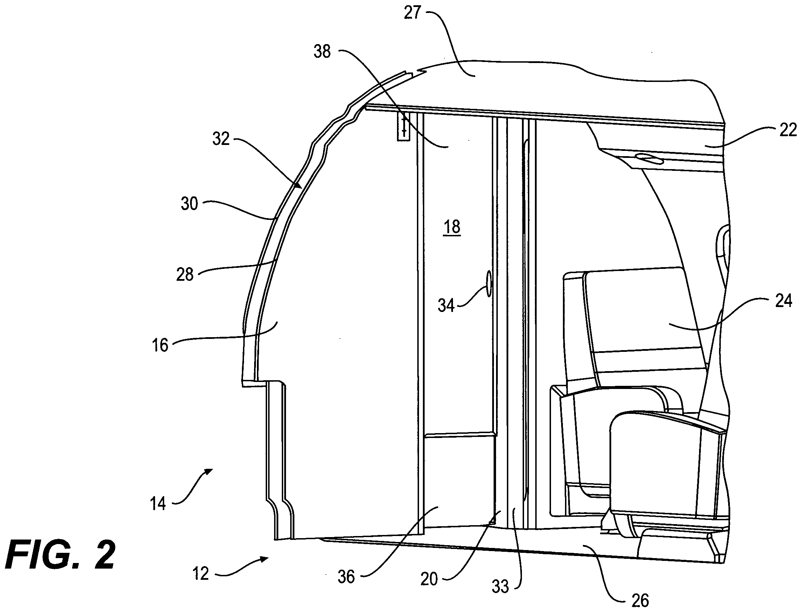

FIG. 2 shows an exemplary representation of the interior of aircraft 10, where the aircraft interior includes bulkhead 16 and door 18 and where door 18 is shown to be partially extending across aperture 20 defined in bulkhead 16. The aircraft interior may further include baggage compartment 22, furnishings 24, floor 26 and ceiling 27. Bulkhead 16 may comprise one or more walls/partitions between first zone 12 and second zone 14. Bulkhead 16 may comprise first panel 28 and second panel 30 defining internal cavity 32 therebetween. Door 18, may, for example, include a sliding pocket door configured to substantially extend across aperture 20 when in a closed position and be substantially recessed (e.g. stowed) in internal cavity 32 of bulkhead 16 when in an open position. Door 18, may extend to and abut against opposing side 33 of aperture 20 when in the open position. Accordingly, door 18 may be used to open and close aperture 20 by being moved laterally in and out of aperture 20 during opening and closing of door 18. Door 18 may include handle 34 and pressure-relief element 36.

Pressure-relief element 36 may be configured to provide blow-out functionality during a rapid decompression event in one of first zone 12 and second zone 14. Accordingly, pressure-relief element 36 may comprise a panel releasably retained such that pressure-relief element 36 may become released upon presence of a predetermined pressure differential across pressure-relief element 36 (e.g. between first zone 12 and second zone 14). The release of pressure-relief element 36 may create an opening between first zone 12 and second zone 14 and thereby reduce or substantially eliminate any pressure differential between first zone 12 and second zone 14. Pressure-relief element 36 may form at least part of door 18. For example, door 18 may comprise main portion 38 configured to cooperate with pressure-relief element 36 in opening and closing aperture 20. Alternatively, door 18 may consist entirely of pressure-relief element 36 without main portion 38. For example, pressure-relief element 36 may be sized to occupy the entire area of door 18 or only a partial fraction of the area of door 18. The size of pressure-relief element 36 relative to door 18 may depend on the size of door 18 and whether door 18 is used for opening and closing an occupant passage or another type of aperture 20 in bulkhead 16. In any event, pressure-relief element 36 may be sized and retained to provide a suitable pressure-relief function during a rapid decompression event.

As shown in FIG. 2, pressure-relief element 36 may comprise a footer (e.g. lower part) of door 18. However, one skilled in the relevant arts will understand that pressure-relief element 36 could include another part (e.g. top and/or middle) of door 18.

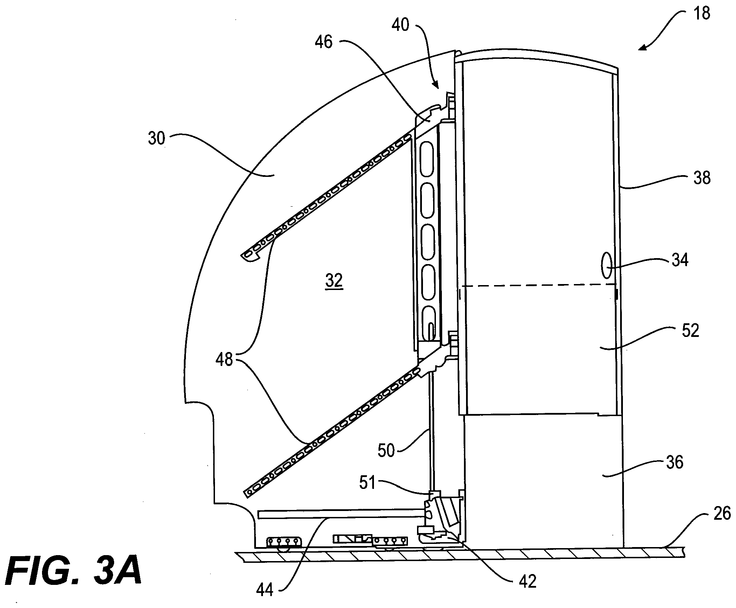

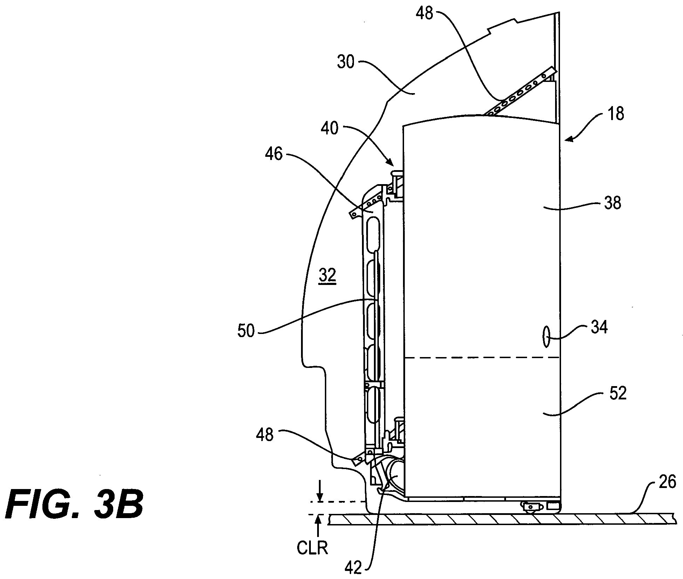

FIGS. 3A and 3B respectively show a front elevation view of door 18 in a closed position (FIG. 3A) and in an open position (FIG. 3B). First bulkhead panel 28 has been removed for the purpose of illustrating the inside of cavity 32. Interface 40 may be used to couple door 18 to the aircraft interior. Interface 40 may also be configured to permit movement of door 18 between open and closed positions. For example, interface 40 may be configured to guide door 18 laterally in and out of aperture 20 during opening and closing of door 18. Interface 40 may be configured to permit non-destructive de-coupling of pressure-relief element 36 from the aircraft interior. For example, interface 40 may comprise footer carriage 42 coupled to pressure-relief element 36 and movable along footer track 44 in order to guide pressure-relief element 36 laterally in and out of aperture 20.

Interface 40 may also comprise main carriage 46 coupled to main portion 38 of door 18 and movable along main tracks 48 in order to guide main portion 38 laterally in and out of aperture 20 during opening and closing of door 18. Link 50 (e.g. bar) may provide a physical connection between footer carriage 42 and main carriage 46 to permit substantially synchronized movement of footer carriage 42 and main carriage 46 during opening and closing of door 18. For example, link 50 may be coupled to footer carriage 42 via bracket 51. Link 50 may also permit an opening/closing force being applied to handle 34 on main portion 38 of door 18 to be transmitted to footer carriage 42 and hence to pressure-relief element 36.

Footer track 44 and main tracks 48 may be non-parallel. For example, footer track 44 may be substantially parallel to floor 26 and main tracks 48 may be non-parallel (e.g. inclined) relative to floor 26. The inclination of main tracks 48 may be provided to cause downward movement of main portion 38 during opening of door 18 to compensate for the decreasing height of ceiling 27 (due to the substantially circular cross-sectional shape of the fuselage of aircraft 10 as door 18 moves laterally toward the open position. As explained further below, a sliding connection may be provided between link 50 and footer carriage 42 and/or main carriage 46 to permit relative vertical movement between footer carriage 42 and main carriage 46 during opening and closing of door 18.

Pressure-relief element 36 and main portion 38 of door 18 may be movable relative to each other during opening and closing of door 18. Accordingly, main portion 38 or door 18 may include internal pocket 52 configured for receiving pressure-relief element 36 during opening of door 18. For example, as main portion 38 of door 18 is opened and undergoes downward (i.e. toward floor 26) movement under the guidance of main tracks 48, pressure-relief element 36 may be received in pocket 52 so that the overall height of door 18 can be reduced to consequently permit stowage of door 18 into cavity 32. Alternatively, instead of pocket 52 being provided, main portion 38 and pressure-relief element 36 could be offset relative to each other (e.g. not in the same plane) in order to permit relative vertical movement between each other.

One skilled in the relevant arts will understand that other devices, components and mechanisms (not shown) associated with door 18 may be provided to assist an occupant in opening and closing of door 18 (e.g. automatically open/close door 18) and/or also assist in holding door 18 in the desired open position or closed position.

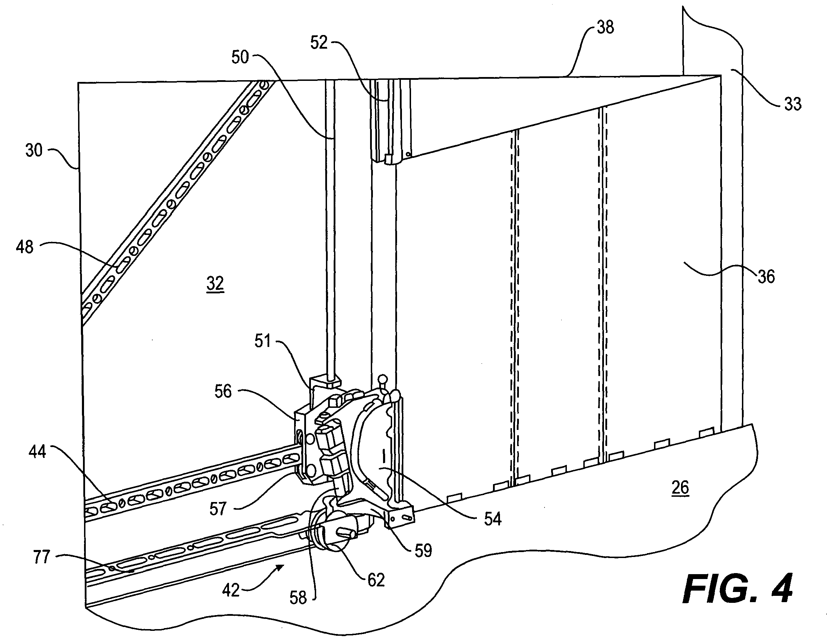

FIG. 4 shows footer carriage 42 being coupled to pressure-relief element 36. Footer carriage 42 may be releasably coupled to a lower part (e.g. closer to floor 26) of pressure-relief element 36. Footer carriage 42 may be configured to cause vertical movement of pressure-relief element 36 during opening and closing of door 18. For example, footer carriage 42 may be configured to cause pressure-relief element 36 to move downward (i.e. toward floor 26) relative to the aircraft interior during closing of door 18. Accordingly, footer carriage 42 may be configured to cause controlled downward movement of pressure-relief element 36 during closing of door 18 as door 18 approaches a fully closed position. Footer carriage 42 may also be configured to cause controlled upward movement of pressure-relief element 36 relative to floor 26 during opening of door 18 upon initial opening of door 18 from a fully closed position. Accordingly, in the open position, a clearance shown as CLR in FIG. 3B may be provided between floor 26 and door 18.

Footer carriage 42 may comprise carriage body 54 movable vertically (i.e. upward and downward-relative to floor 26) in relation to carriage support 56 and hence in relation to footer track 44. Carriage support 56 may comprise one or more rolling and/or sliding and/or other types of member 57 adapted to cooperate with track 44 to thereby permit movement of carriage 42 along track 44.

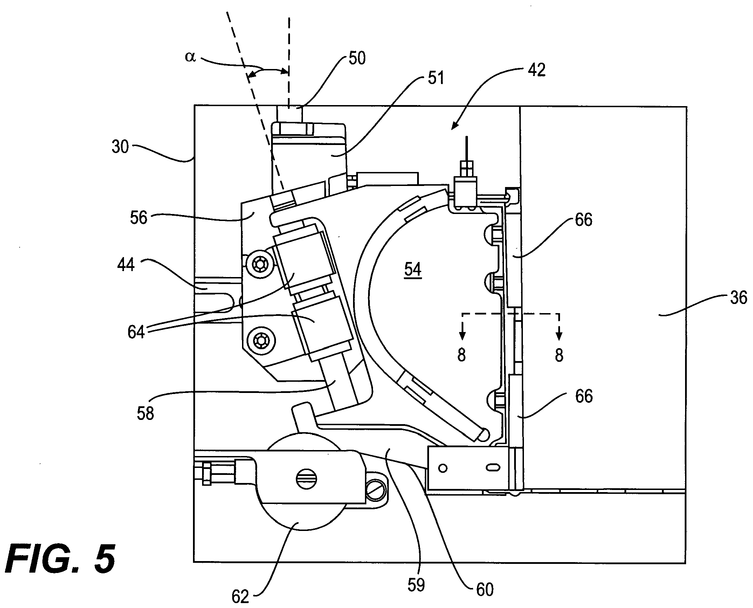

FIG. 5 shows a front elevation view of footer carriage 42. Footer carriage 42 may also comprise sliding member 58 along which the movement of carriage body 54 relative to carriage support 56 may be guided. Footer carriage 42 may also comprise foot portion 59 having cam surface 60 configured to interact with roller 62 in order to cause vertical movement of carriage body 54 relative to carriage support 56 and hence vertical movement of pressure-relief element 36 relative to floor 26 (e.g. aircraft interior). Roller 62 may be secured to first bulkhead panel 28 and/or second bulkhead panel 30 and/or other part of the aircraft interior. Consequently, upward/vertical movement of pressure-relief element 36 may result in clearance CLR between pressure-relief element 36 and floor 26 (see FIG. 3B) in order to permit the routing of fasteners, support structures, cables, wires, pipes and/or any other service conduits (not shown) through bulkhead 16 between door 18 and floor 26. For example, the value of clearance CLR may depend on the diameter and position of roller 62. Accordingly, roller 62 may be sized and positioned to provide a clearance CLR suitable for clearing components disposed inside bulkhead below door 18. In an exemplary embodiment, the value of clearance CLR may be about 6 cm from floor 26. The value of clearance CLR may also be selected to reduce friction between pressure-relief element 36 and floor 26 or any covering (e.g. carpet) that may be disposed on floor 36. Accordingly, the value of clearance CLR may, for example, be in the range of about 2 cm to about 10 cm.

Sliding member 58 may extend through one or more bushings 64 configured to permit sliding movement of sliding member 58 through bushings 64 secured to carriage support 56. While sliding member 58 may permit upward and downward movement of footer carriage 42 relative to carriage support 56, sliding member 58 may also be configure to permit lateral movement of footer carriage 42 relative to carriage support 56. For example, sliding member 58 may be oriented at an angle *α* from the vertical direction (i.e. perpendicular to floor 26) such as in a range from about 5 degrees to about 20 degrees from the vertical direction. In an exemplary embodiment, sliding member 58 may be oriented at an angle in the range of 12 to 18 degrees such as 16 degrees from vertical, for example. One skilled in the relevant arts will understand that any suitable orientation of sliding member 58 may be selected depending on the relative lateral and vertical movement desired between carriage body 54 and carriage support 56 during opening and closing of door 18. The orientation of sliding member 58 and the profile of cam surface 60 may be selected to cooperate together in providing the desired movement of carriage body 54. For example, cam surface 60 may have a profile comprising a substantially linear portion that is inclined relative to the horizontal direction (i.e. relative to floor 26). For example, in an exemplary embodiment a substantially linear portion of cam surface 60 may be inclined at an angle of about 10 to 15 degrees relative to floor 26 but other inclination angles such as between 5 and 30 degrees may also be suitable. Alternatively or in addition, cam surface 60 could comprise a curved portion to provide a varying rate of vertical movement relative to horizontal movement during opening and closing of door 18.

Controlled downward and lateral movement of pressure-relief element 36 during closing of door 18 may permit for a closer fit to be achieved between pressure-relief element 36 and floor 26 and also between pressure-relief element 36 and opposing side 33 of aperture 20 and thereby substantially prevent (e.g. minimize) significant light bleed between adjacent first zone 12 and second zone 14. While pressure-relief element 36 may abut against floor 26 while in the closed position, the upward movement of pressure-relief element 36 upon initial opening of door 18 may substantially prevent dragging of pressure-relief element 36 against floor 26 during opening and closing of door 18. Accordingly, the upward movement of pressure-relief element 36 upon initial opening of door 18 may also substantially prevent abrasion of the lower part of pressure-relief element 36 and/or floor 26.

While the exemplary embodiment provided herein shows the controlled movement provided via footer carriage 42 being applied to pressure-relief element 36, it is understood that such controlled movement could also be applied to other types of door footers/portions not necessarily having a blow-out functionality. In other words, the controlled movement provided via footer carriage 42 could, for example, be applied to any upper or lower portion of door 18, which may or may not have a pressure-relief function. For example, such controlled movement could alternatively be provided to a header portion of door 18 for the purpose of preventing significant light bleed between door 18 and ceiling 27.

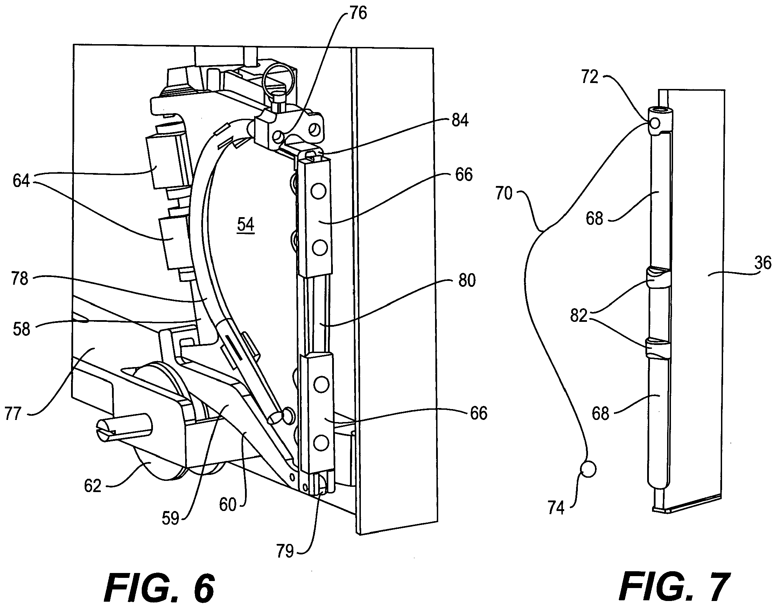

FIGS. 6 and 7 show an exemplary means for releasably coupling pressure-relief element 36 and footer carriage 42 and also for permitting non-destructive de-coupling of pressure-relief element 36 and footer carriage 42 in the event rapid decompression. For example, pressure-relief element 36 may be retained by one or more magnetic forces calibrated to permit release of pressure-relief element 36 upon the presence of a predetermined pressure differential across pressure-relief element 36. The predetermined pressure differential may be selected such that, for example, pressure-relief element 36 would become released before any other part of door 18 and/or bulkhead 16 would become damaged and/or become flying debris that could cause injury to aircraft occupants.

The magnetic force retaining pressure-relief element 36 may be provided by one or more magnets 66 cooperating with one or more corresponding members 68 comprising a magnetic material being attracted to magnets 66. Magnets 66 may be disposed on footer carriage 42 and members 68 may be disposed on pressure-relief element 36 or vice versa. Alternatively, footer carriage 42 could comprise both magnet(s) 66 and member(s) 68 while pressure-relief element 36 also comprises both magnet(s) 66 and member(s) 68 configured to cooperate with those on footer carriage 42.

Members 68 may comprise a unitary component provided with one or more surfaces suitable for cooperating with corresponding magnets 66. Members 68 may be made of any suitable magnetic material(s) (i.e. attracted by a magnet) causing members 68 to be attracted to corresponding magnets 66. For example, members 68 may comprise one or more metallic (e.g. steel) plates attracted to by magnets 66. The size, type and strength of magnets 66 and the size/type of members 68 may be selected to produce the calibrated magnetic force(s) required to produce the desired pressure-relief function of pressure-relief element 36. For example, magnets 66 may comprise one or more permanent magnets and/or one or more electromagnets. In the event where magnets 66 include one or more electromagnets, the magnetic force of such electromagnets may be electrically controlled and/or may be deactivated in the event of a rapid decompression event. Members 68 may, for example comprise ferromagnetic material(s) and/or any suitable material(s) causing members 68 to be attracted to magnets 66 and provide the desired magnetic retaining force between footer carriage 42 and pressure-relief element 36. It is understood that pressure-relief element 36 could comprise any portion(s) including the entirety of door 18 and not necessarily a footer of door 18. Accordingly, depending on the position and size of pressure-relief element 36, the magnetic retention force could be provided between the pressure-relief element 36 and any other suitable part of aircraft interior. Alternatively, the magnetic retention force could be provided between pressure-relief element 36 and main portion 38 of door 18.

Lanyard 70 may be provided to prevent pressure-relief element 36 from becoming flying debris upon release of the pressure-relief element 36 due to the predetermined pressure differential. Lanyard 70 may permit pressure-relief element 36 to become released (e.g. create an opening between first zone 12 and second zone 14 for the purpose of equalizing the pressure differential) while remaining attached to footer carriage 42 or any other suitable part of the aircraft interior. First end 72 of lanyard 70 may be secured to pressure-relief element 36 while second end 74 of lanyard 70 may be secured to footer carriage 42. Lanyard 70 may extend through lock 76 and channel 78 of footer carriage 42 so that second end 74 of lanyard 70 would become retained by lock 76 in the event of a release (e.g. blow-out) of pressure-relief element 36.

Support ramp 77 may be secured to the aircraft interior and be provided for supporting pressure-relief element 36 when door 18 is in the open position and also during movement of door 18 during opening and closing. For example, rollers 79 may be provided on footer carriage 42 to engage with support ramp 77.

Footer carriage 42 and pressure-relief element 36 may also comprise self-locating features 80, 82 that may facilitate the installation of pressure-relief element 36 and also relative positioning of magnets 66 and members 68. Such self locating features may include one or more recesses 80 and corresponding one or more protrusions 82.

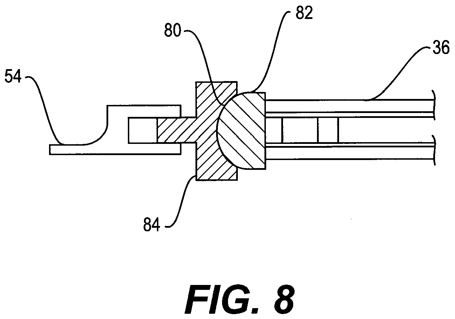

FIG. 8 shows a cross-section view of the self-locating features 80, 82 taken along line 8-8 of FIG. 5. Recess 80 and corresponding protrusions 82 may have complementary shapes. While the exemplary embodiment illustrates self-locating features 80, 82 having circular profiles, it is understood that other suitable shapes and profiles could also be used instead of or in addition to those shown.

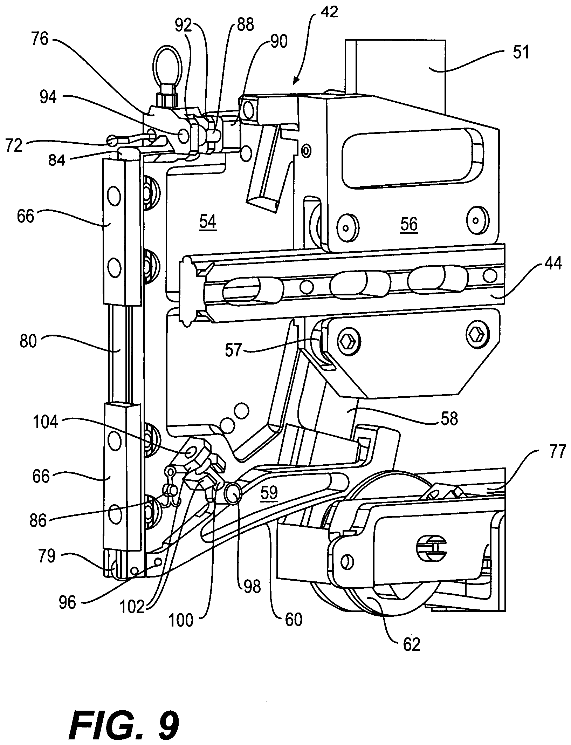

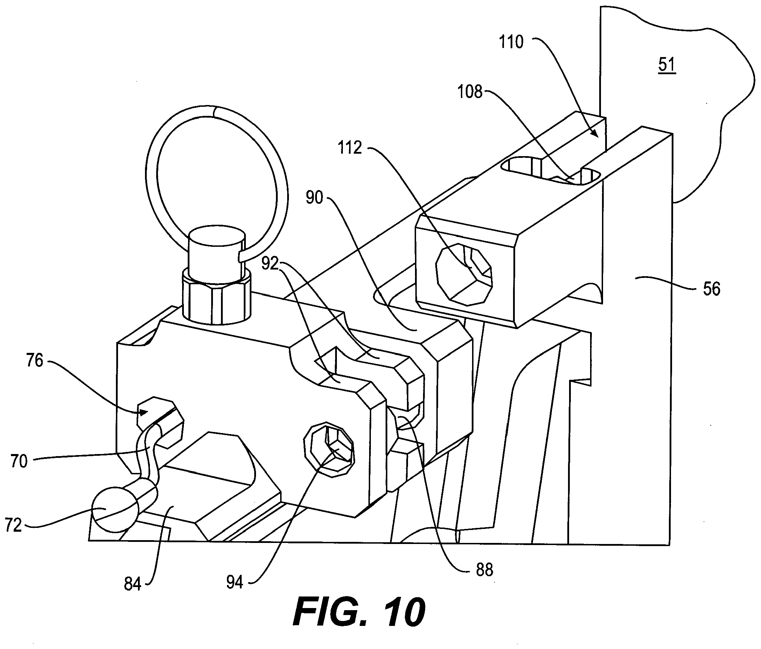

FIGS. 9 and 10 show exemplary means for adjusting the position of pressure-relief element 36 in relation to aircraft interior (e.g. floor 26). As mentioned above, footer carriage 42 may be configured to provide position adjustment of pressure-relief element 36 relative to the aircraft interior in three degrees of freedom, namely tilt (e.g. substantially within a plane of door 18), vertical (e.g. substantially perpendicular to floor 26) and lateral (e.g. substantially parallel to floor 26). The position adjustment of pressure-relief element 36 may permit reduction in light bleed around pressure-relief element 36 when in the closed position.

Tilt adjustment of pressure-relief element 36 relative to the aircraft interior (e.g. floor 26, aperture 20) may be made via adjustable holder 84 of footer carriage 42 to adjust the parallelism of a lower edge of pressure-relief element 36 with floor 26. Magnets 66 and or magnetic members 68 may be secured to adjustable holder 84. Adjustable holder 84 may be pivotally coupled to carriage body 54 at pivot pin 86. For example, adjustable holder 84 may comprise a tongue (not shown) extending inside carriage body 54 and through which pivot pin 86 may extend. Adjustable holder 84 may also be coupled to carriage body 54 via tilt bolt 88. Tilt bolt 88 may be threaded into pad 90 of carriage body 54. A head of tilt bolt 88 may be secured (e.g. sandwiched) between flanges 92, which may be secured to adjustable holder 84. Tilt bolt 88 may comprise an "Allen" type bolt or other suitable type of fastener, which may be threaded. One of flanges 92 may comprise hole 94 permitting insertion of a suitable tool/wrench for engaging and turning tilt bolt 88. Turning of tilt bolt 88 may cause the head of tilt bolt 88 to engage flanges 92 to cause pivoting of adjustable holder 84 about pivot pin 86 and consequently cause tilting of pressure-relief element 36 coupled to footer carriage 42.

Vertical position adjustment of pressure-relief element 36 relative to the aircraft interior (e.g. floor 26, aperture 20) may be made via adjustable foot portion 59 of footer carriage 42. For example, foot portion 59 may be pivotally coupled to carriage body 54 at foot pivot 96. Foot portion 59 may comprise foot pin 98 secured thereto and into which bolt 100 may be threaded. A head of bolt 100 may be secured (e.g. sandwiched) between flanges 102, which may be secured to carriage body 54. Bolt 100 may comprise an "Allen" type bolt or other suitable type of fastener which may be threaded. One of flanges 102 may comprise hole 104 permitting insertion of a suitable tool/wrench for engaging and turning bolt 100. Turning of bolt 100 may cause the head of bolt 100 to engage flanges 102 to cause relative pivoting of adjustable foot portion 59 and carriage body 54 about foot pivot 96 and, through the interaction of cam surface 60 and roller 62, cause vertical movement carriage body 54 relative to carriage support 56. Such vertical movement of carriage body 54 relative to carriage support 56 may consequently cause vertical movement of pressure-relief element 36 coupled to footer carriage 42.

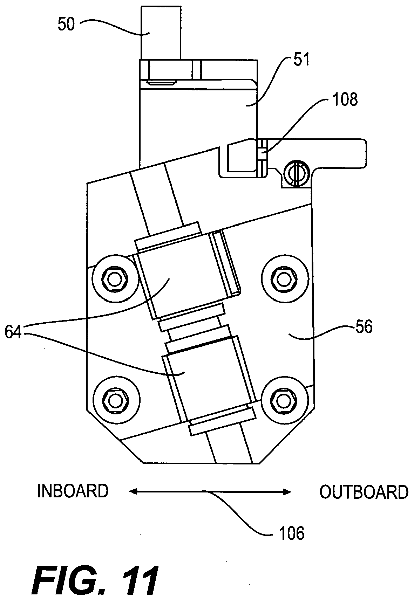

FIG. 10 and 11 illustrate how lateral position adjustment of pressure-relief element 36 relative to the aircraft interior (e.g. floor 26, aperture 20) may be made. Lateral adjustment may be made by adjusting the position of carriage support 56 relative to bracket 51. Carriage support 56 and bracket 51 may be slidably coupled to each other according to known or other methods. Lateral adjustment of carriage support 56 may be made along line 106 toward either an outboard direction (e.g. toward a closed position of door 18) or inboard direction (e.g. toward an open position of door 18) by turning bolt 108, which may be threaded into bracket 51. Bolt 108 may be received in slot 110 formed in carriage support 56. For example, slot 110 may be suitably shaped so that head of bolt 108 is engaged in slot 110 as bolt 108 is turned to cause relative lateral movement between bracket 51 and carriage support 56. Bolt 108 may comprise an "Allen" type bolt or other suitable type of fastener which may be threaded. Accordingly, slot 110 may have a substantially T-shaped profile. Hole 112 may be provided in carriage support 56 to permit insertion of a suitable tool/wrench for engaging and turning bolt 108. Turning of bolt 108 may cause relative movement between carriage support 56 and bracket 51 and consequently cause lateral movement of pressure-relief element 36 coupled to footer carriage 42.

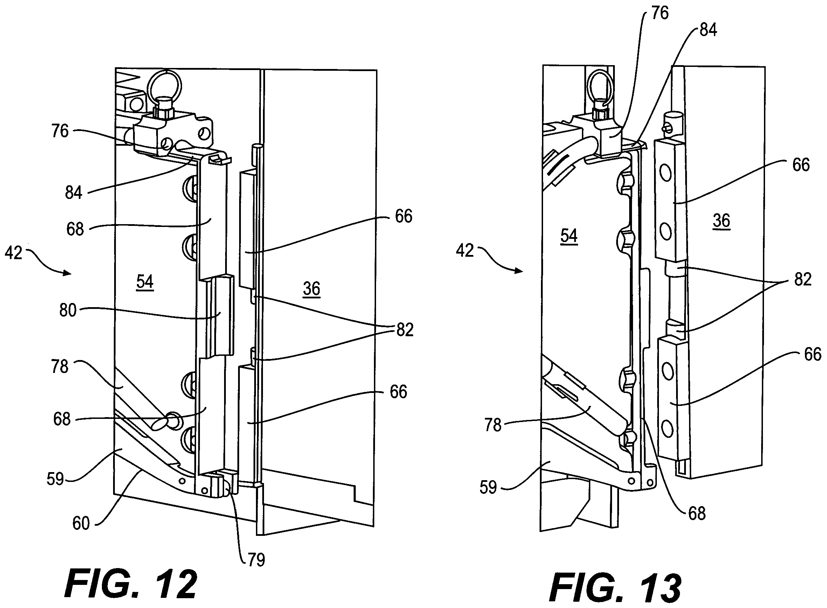

FIGS. 12 and 13 illustrate an alternate exemplary embodiment of means for releasably coupling pressure-relief element 36 to footer carriage 42 using one or more magnetic retaining forces. In this embodiment, and as mentioned above, magnets 66 may be disposed on pressure-relief element 36 and members 68 may be disposed on footer carriage 42. Accordingly, in this example, adjustable holder 84 may comprise members 68 instead of magnets 66. Self-locating features 80 and 82 could be similarly disposed on pressure-relief element 36 and adjustable holder 84 respectively. Alternatively, it is also understood that protrusions 82 could instead be disposed on adjustable holder 84 and/or that corresponding recess 80 could instead be disposed on pressure-relief element 36.

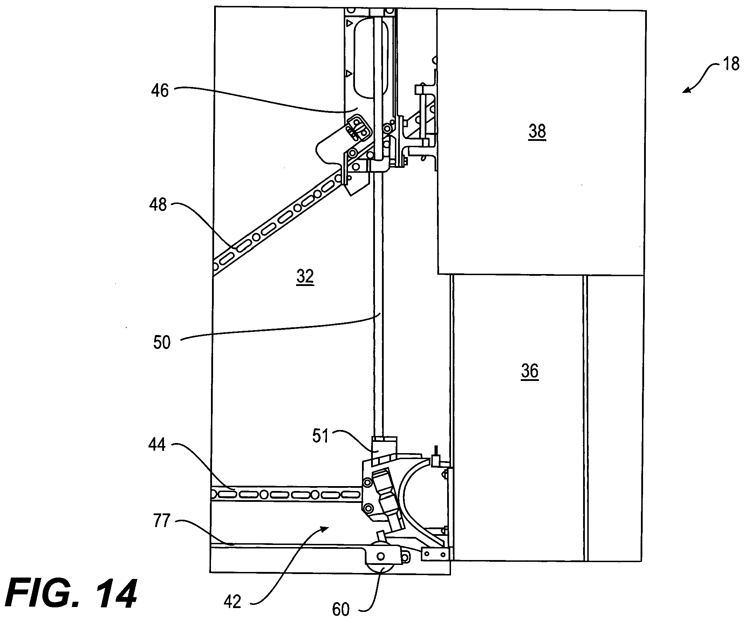

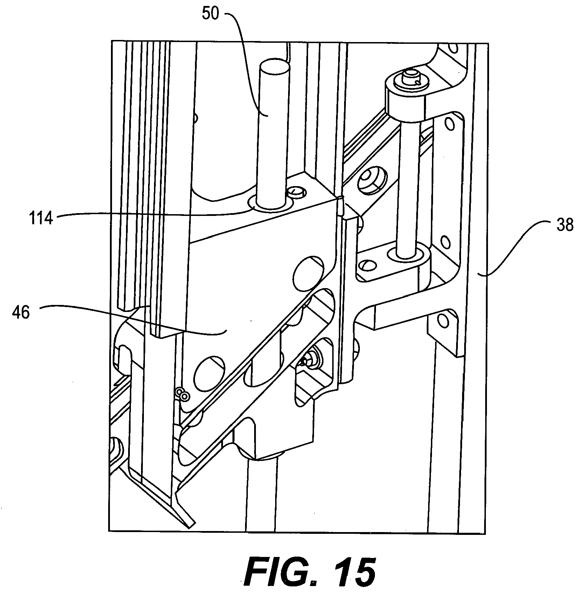

FIGS. 14 and 15 show the attachment of link 50 between main carriage 46 and footer carriage 42. Link 50 may be in the form of a structural member (e.g. bar) that may provide a mechanical coupling of footer carriage 42 and main carriage 46. Such mechanical coupling may permit substantially synchronized lateral movement of footer carriage 42 and main carriage 46 during opening and closing of door 18. For example, link 50 may also permit an opening/closing force being applied to main portion 38 of door 18 (e.g. via handle 34 by an occupant or otherwise) to be transmitted to footer carriage 42 and hence pressure-relief element 36.

Since footer track 44 and main tracks 48 may be non-parallel for reasons explained above, a sliding connection through main carriage 46 may be provided so that vertical movement of main carriage 46 relative to footer carriage 42 may be permitted during opening and closing of door 18. The sliding connection through main carriage 46 may be provided by use of suitable bushings 114 permitting sliding of link 50 through main carriage 46. In this exemplary embodiment, connection of link 50 with footer carriage 42 may not provide any relative movement between link 50 and footer carriage 42. However, depending on the configuration of carriages 42, 46 and of tracks 44, 48, it is understood that a sliding connection for link 50 could instead or additionally be provided in footer carriage 42 and thereby permit relative movement between link 50 and footer carriage 42.

During operation, door assemblies including door 18 and interface 40 may used to provide blow-out functionality during a rapid decompression event. Depending on the configuration of the door assemblies, such door assemblies as described herein may also provide reduced light bleed between first zone 12 and second zone 14 of aircraft 10.

For example, door 18 may be opened and closed to provide a barrier between first zone 12 and second zone 14. In the event of a rapid decompression of either one of first zone 12 and second zone 14 while door 18 is in a closed position, a significant pressure differential could be created across door 18 and also bulkhead 16. In order to prevent or reduce the likelihood of injury to aircraft occupants by flying debris and/or structural damage to door 18, bulkhead 16 and/or other parts of the interior of aircraft 10, pressure-relief element 36 of door 18 may become released (e.g. blown-out) in the event that the pressure differential reaches a predetermined level. The magnetic retaining force(s) between pressure-relief element 36 and footer carriage 42 may be calibrated so as to be overcome upon the application of a predetermined pressure differential across pressure-relief element 36. The predetermined pressure differential may be selected to be below a threshold where structural damage to other parts of the aircraft interior could occur.

By having the coupling between pressure-relief element 36 and footer carriage 42 made near a lower part of pressure-relief element 36 and also having a upper part of pressure-relief element 36 partially disposed inside pocket 52 of main portion 38 of door 18 (see Fig. 3A), the release of the magnetic retaining force may cause the lower part of pressure-relief element 36 to initially swing outward (i.e. out of the plane of door 18) upon initial release of pressure-relief element 36 as pressure-relief element 36 begins to form one or more openings between first zone 12 and second zone 14. The forming of one or more openings between first zone 12 and second zone 14 by the release of pressure-relief element 36 may substantially reduce or eliminate the pressure differential between first zone 12 and second zone 14. In order to prevent pressure-relief element 36 from becoming flying debris during such release, pressure-relief element 36 may be attached to footer carriage 42 and/or to other part of the aircraft interior via lanyard 70 (see FIG. 7).

The decoupling of pressure-relief element 36 from footer carriage 42 by the overcoming of the magnetic retaining force may be substantially non-destructive. Accordingly, following a release of pressure-relief element 36 due to rapid decompression event or other circumstance, no substantial repair may be required to door 18, footer carriage 42 and or other components of interface 40. Accordingly, pressure-relief element 36 may simply be re-installed by re-coupling pressure-relief element 36 to footer carriage 42 using magnets 66 and corresponding magnetic members 68. Self-aligning features 80 and 82 (see FIG. 8) may be used to properly position pressure-relief element 36 relative to footer carriage 42.

Door assemblies described herein may also allow relatively low amount of light bleed between first zone 12 and second zone 14. Mechanisms and devices described herein may be used to adjust the tilt, vertical position, and lateral position of pressure-relief element 36 so that the position of pressure-relief element 36 within aperture 20 and relative to floor 26 and/or other parts of the aircraft interior may be adjusted to reduce or substantially eliminate gaps and hence the amount of light bleed around pressure-relief element 36. Footer carriage 42 may be configured to provide adjustment along three degrees of freedom but it is understood that the door assemblies described herein could be configured to provide adjustment capabilities in more or fewer degrees of freedom depending on specific applications and requirements. It is also understood that mechanisms and devices described herein could also be used to make position adjustments to main portion 38 or any portions of door 18 which may or may not have a pressure-relief function. For example, footer carriage 42 could instead be coupled to a footer or a header portion of door 18 not having a pressure-relief function.

The vertical movement of pressure-relief element 36 during opening and closing of door 18 may also contribute to reducing light bleed around pressure-relief element 36. For example, the controlled downward and/or lateral movement of pressure-relief element 36 provided by the interaction of cam surface 60 and roller 62 during closing of door 18 may permit for a closer fit to be achieved between pressure-relief element 36 and floor 26 and also between pressure-relief element 36 and opposing side 33 of aperture 20. While pressure-relief element 36 may be adjusted to abut against floor 26 while in the closed position, the upward movement of pressure-relief element 36 upon initial opening of door 18 may substantially prevent dragging of pressure-relief element 36 against floor 26 during opening and closing of door 18. Consequently, the upward movement of pressure-relief element 36 upon initial opening of door 18 may also substantially prevent abrasion (e.g. damage) of the lower part of pressure-relief element 36 and/or floor 26. Accordingly, the door assemblies described herein may also be relatively quiet during opening and closing.

The above description is meant to be exemplary only, and one skilled in the art will recognize that changes may be made to the embodiments described without departing from the scope of the invention disclosed. For example, while the use of one or more calibrated magnetic forces to retain pressure-relief element 36 is described, one skilled in the relevant arts will appreciate that other types of retaining mechanisms could be used to retain pressure-relief element 36. Also, one skilled in the relevant arts will appreciate that while the systems, devices and assemblies disclosed and shown herein may comprise a specific number of elements/components, the systems, devices and assemblies could be modified to include additional or fewer of such elements/components. For example, while any of the elements/components disclosed may be referenced as being singular, it is understood that the embodiments disclosed herein could be modified to include a plurality of such elements/components. Those and other modifications which fall within the scope of the present invention will be apparent to those skilled in the art, in light of a review of this disclosure, and such modifications are intended to fall within the appended claims.

## Claims

1. A door assembly for an aircraft interior, the door assembly comprising:
a door (18) for opening and closing an aperture (20) between zones (12, 14) of the aircraft interior, wherein the door (18) comprises a main portion (38), a pressure-relief element (36) cooperating with the main portion (38) in opening and closing the aperture (20) between the zones (12, 14) of the aircraft interior and forming at least a portion of the door (18), the pressure-relief element (36) being retained by a magnetic force calibrated to permit release of the pressure-relief element upon presence of a predetermined pressure differential across the pressure-relief element; and
an interface (40) configured to couple the door (18) to the aircraft interior,
wherein the pressure-relief element (36) is coupled to the interface (40) by the calibrated magnetic force.

2. The door assembly as defined in claim 1, wherein the interface (40) comprises a carriage (42) movable along a track (44) attachable to the aircraft interior.

3. The door assembly as defined in claim 2, wherein the carriage (42) comprises a magnet (66) and the pressure-relief element (36) comprises a member (68) attracted to the magnet (66).

4. The door assembly as defined in claim 2, wherein the pressure-relief element (36) comprises a magnet (66) and the carriage (42) comprises a member (68) attracted to the magnet.

5. The door assembly as defined in any one of claims 2 to 4, wherein the carriage (42) comprises a holder (84) for at least one of the magnet (66) and the member (68) attracted to the magnet (66), the position of the holder (84) being adjustable relative to the aircraft interior.

6. The door assembly as defined in any one of claims 1 to 5, wherein a lower part of the pressure-relief element (36) is coupled to the interface (40) by the calibrated magnetic force.

7. The door assembly as defined in any one of claims 2 to 6, wherein the track (44) is configured to guide the pressure-relief element (36) laterally in and out of the aperture (20) during opening and closing of the door (18).

8. The door assembly as defined in any one of claims 1 to 7, comprising cooperating self-locating features (80, 82) for relative positioning of the interface (40) and the pressure-relief element (36).

9. The door assembly as defined in any one of claims 1 to 8, wherein the interface causes downward movement of the pressure-relief element (36) during closing of the door (18).

10. The door assembly as defined in any one of claims 1 to 9, wherein the pressure-relief element (36) comprises a footer.

11. The door assembly as defined in any one of claims 1 to 10, wherein the door (18) is a pocket door.

12. The door assembly as defined in any one of claims 1 to 11, comprising a permanent magnet.

13. An aircraft comprising the door assembly as defined in any one of claims 1 to 12.

## Patentansprüche

1. Türanordnung für einen Flugzeuginnenraum, wobei die Türanordnung Folgendes umfasst:
eine Tür (18) zum Öffnen und Schließen einer Öffnung (20) zwischen Zonen (12, 14) eines Flugzeuginnenraums, wobei die Tür (18) einen Hauptabschnitt (38) umfasst, wobei ein Druckentlastungselement (36) mit dem Hauptabschnitt (38) beim Öffnen und Schließen der Öffnung (20) zwischen den Zonen (12, 14) des Flugzeuginnenraums zusammenwirkt und mindestens einen Abschnitt der Tür (18) bildet, wobei das Druckentlastungselement (36) durch eine Magnetkraft zurückgehalten wird, die dazu kalibriert ist, ein Lösen des Druckentlastungselements beim Vorhandensein eines vorbestimmten Druckunterschieds innerhalb des Druckentlastungselements zu ermöglichen; und
eine Schnittstelle (40), die dazu konfiguriert ist, die Tür (18) an den Flugzeuginnenraum zu koppeln, wobei das Druckentlastungselement (36) durch die kalibrierte Magnetkraft an die Schnittstelle (40) gekoppelt ist.

2. Türanordnung nach Anspruch 1, wobei die Schnittstelle (40) einen Schlitten (42) umfasst, der entlang einer Schiene (44) beweglich ist, die an den Flugzeuginnenraum angebracht werden kann.

3. Türanordnung nach Anspruch 2, wobei der Schlitten (42) einen Magneten (66) umfasst und das Druckentlastungselement (36) ein Teil (68) umfasst, das von dem Magneten (66) angezogen wird.

4. Türanordnung nach Anspruch 2, wobei das Druckentlastungselement (36) einen Magneten (66) umfasst und der Schlitten (42) ein Teil (68) umfasst, das von dem Magneten angezogen wird.

5. Türanordnung nach einem der Ansprüche 2 bis 4, wobei der Schlitten (42) einen Halter (84) für mindestens eines von dem Magneten (66) und dem Teil (68), das von dem Magneten (66) angezogen wird, umfasst, wobei die Position des Halters (84) relativ zu dem Flugzeuginnenraum einstellbar ist.

6. Türanordnung nach einem der Ansprüche 1 bis 5, wobei ein unterer Teil des Druckentlastungselements (36) durch die kalibrierte Magnetkraft an die Schnittstelle (40) gekoppelt ist.

7. Türanordnung nach einem der Ansprüche 2 bis 6, wobei die Schiene (44) dazu konfiguriert ist, das Druckentlastungselement (36) während des Öffnens und Schließens der Tür (18) seitlich in die Öffnung (20) und aus dieser herauszuführen.

8. Türanordnung nach einem der Ansprüche 1 bis 7, umfassend zusammenwirkende selbstpositionierende Merkmale (80, 82) zum relativen Positionieren der Schnittstelle (40) und des Druckentlastungselements (36).

9. Türanordnung nach einem der Ansprüche 1 bis 8, wobei die Schnittstelle während des Schließens der Tür (18) eine Abwärtsbewegung des Druckentlastungselements (36) veranlasst.

10. Türanordnung nach einem der Ansprüche 1 bis 9, wobei das Druckentlastungselement (36) eine Fußleiste umfasst.

11. Türanordnung nach einem der Ansprüche 1 bis 10, wobei die Tür (18) eine Schiebetür mit Kastensystem ist.

12. Türanordnung nach einem der Ansprüche 1 bis 11, umfassend einen Permanentmagneten.

13. Flugzeug, umfassend eine Türanordnung nach einem der Ansprüche 1 bis 12.

## Revendications

1. Ensemble de porte pour un intérieur d'aéronef, l'ensemble de porte comprenant :
une porte (18) destinée à ouvrir et fermer une ouverture (20) entre des zones (12, 14) de l'intérieur d'aéronef, dans lequel la porte (18) comprend une partie principale (38), un élément limiteur de pression (36) en coopération avec la partie principale (38) dans l'ouverture et la fermeture de l'ouverture (20) entre les zones (12, 14) de l'intérieur d'aéronef et formant au moins une partie de la porte (18), l'élément limiteur de pression (36) étant retenu par une force magnétique calibrée pour permettre la libération de l'élément limiteur de pression en présence d'un différentiel de pression prédéterminé à travers l'élément limiteur de pression ; et
une interface (40) configurée pour coupler la porte (18) à l'intérieur d'aéronef, dans lequel l'élément limiteur de pression (36) est couplé à l'interface (40) par la force magnétique calibrée.

2. Ensemble de porte selon la revendication 1, dans lequel l'interface (40) comprend un chariot (42) mobile le long d'un chemin de roulement (44) attachable à l'intérieur d'aéronef.

3. Ensemble de porte selon la revendication 2, dans lequel le chariot (42) comprend un aimant (66) et l'élément limiteur de pression (36) comprend un élément (68) attiré vers l'aimant (66).

4. Ensemble de porte selon la revendication 2, dans lequel l'élément limiteur de pression (36) comprend un aimant (66) et le chariot (42) comprend un élément (68) attiré vers l'aimant.

5. Ensemble de porte selon l'une quelconque des revendications 2 à 4, dans lequel le chariot (42) comprend un support (84) pour au moins l'un de l'aimant (66) et l'élément (68) attiré vers l'aimant (66), la position du support (84) étant ajustable par rapport à l'intérieur d'aéronef.

6. Ensemble de porte selon l'une quelconque des revendications 1 à 5, dans lequel une partie inférieure de l'élément limiteur de pression (36) est couplée à l'interface (40) par la force magnétique calibrée.

7. Ensemble de porte selon l'une quelconque des revendications 2 à 6, dans lequel le chemin de roulement (44) est configuré pour guider l'élément limiteur de pression (36) latéralement dans et hors de l'ouverture (20) pendant l'ouverture et la fermeture de la porte (18).

8. Ensemble de porte selon l'une quelconque des revendications 1 à 7, comprenant des fonctions d'auto-positionnement en coopération (80, 82) destinées au positionnement relatif de l'interface (40) et de l'élément limiteur de pression (36).

9. Ensemble de porte selon l'une quelconque des revendications 1 à 8, dans lequel l'interface induit un mouvement vers le bas de l'élément limiteur de pression (36) pendant la fermeture de la porte (18).

10. Ensemble de porte selon l'une quelconque des revendications 1 à 9, dans lequel l'élément limiteur de pression (36) comprend un pied.

11. Ensemble de porte selon l'une quelconque des revendications 1 à 10, dans lequel la porte (18) est une porte coulissante escamotable.

12. Ensemble de porte selon l'une quelconque des revendications 1 à 11, comprenant un aimant permanent.

13. Aéronef comprenant l'ensemble de porte selon l'une quelconque des revendications 1 à 12.
